# FASCICULE DE BREVET EUROPEEN

(11) **EP 3 253 717 B1**
(45) Date de publication et mention de la délivrance du brevet: **09.01.2019**
(21) Numéro de dépôt: 16705997.1
(22) Date de dépôt: 02.02.2016
(51) Int. Cl.: C02F 11/04, C02F 11/12, C02F 11/18, C10L 9/08, F23G 5/027, F23G 7/00, C02F 3/30, C02F 3/00, C02F 9/00

(54) **OPTIMISATION D'UN PROCEDE DE TRAITEMENT DE PULPE**
OPTIMIERUNG EINES ZELLSTOFFBEHANDLUNGSVERFAHRENS
OPTIMISATION OF A PULP TREATMENT METHOD

(30) Priorité: 02.02.2015 FR 1550780
(43) Date de publication de la demande: 13.12.2017
(73) Titulaire: Suez International, 92040 Paris la Défense Cedex (FR)
(72) Inventeur: PARDO, Pierre Emmanuel, 91400 Orsay (FR); VANDEN BOSSCHE, Hugues, 92410 Ville D'avray (FR)
(74) Mandataire: IPAZ
(86) Numéro de dépôt international: PCT/IB2016/050517
(87) Numéro de publication internationale: WO 2016/125076

(56) Documents cités:
- EP-A1- 0 564 298
- EP-A1- 2 796 419
- WO-A1-2012/019310
- WO-A1-2013/155631
- CA-A1- 2 752 747
- CN-A- 102 974 592
- CN-U- 203 373 248
- FR-A1- 3 003 558
- US-A1- 2012 094 363

## Description

La présente invention a pour objet un procédé optimisé de traitement de pulpe, notamment de boues de station d'épuration.

Le domaine de l'invention est celui de l'hydrolyse thermique, c'est-à-dire de la mise en pression et en température d'un substrat afin d'améliorer sa capacité de digestion par des bactéries anaérobies en vue de produire du biogaz.

L'hydrolyse de la pulpe, matière organique particulaire, associée à une digestion anaérobie, est un procédé connu. Il vise à augmenter la solubilisation de la pulpe et à améliorer ainsi le rendement de la digestion et sa production de biogaz. Ce procédé est applicable à tout substrat organique pâteux susceptible de faire l'objet d'une digestion anaérobie, notamment aux boues d'épuration. Par la suite dans le texte, les termes « pulpe », « matière organique » et « boues » sont équivalents.

Parmi ces procédés, l'hydrolyse thermique qui associe les effets d'un chauffage à haute température et généralement d'une dépressurisation brutale est le procédé le plus utilisé. Elle peut être réalisée sur un réacteur en continu ou par un procédé discontinu (procédé en batch) comportant plusieurs réacteurs ou encore un ou plusieurs réacteurs associés à des enceintes tampon. Le mode de chauffage le plus courant de ces procédés est l'injection de vapeur, qui est utilisée pour porter la boue à la température requise pour l'hydrolyse (généralement 150 à 180 °C).

L'investissement requis par le procédé d'hydrolyse qui complète la digestion, est compensé ensuite par un gain des coûts d'opération de la digestion liés à l'amélioration de la production de biogaz (permettant la production d'énergie) ainsi que la diminution des quantités de solides à éliminer du fait de l'élimination accrue de la matière volatile mais aussi de la meilleure déshydratabilité du digestat. Cependant le retour sur investissement est généralement long car les installations sont chères.

La profitabilité de l'hydrolyse thermique est grandement améliorée en ce qu'elle permet aussi une diminution du volume des installations de digestion. Dans les procédés de digestion par voie humide cette réduction de volume est favorisée par la rhéologie de la matière organique en sortie de l'étape d'hydrolyse. En effet, le traitement d'hydrolyse a pour effet de réduire drastiquement la viscosité des produits, ce qui en facilite le brassage et permet d'augmenter sensiblement la concentration d'alimentation et donc la charge volumique des ouvrages, c'est à dire la quantité de matière à digérer exprimée en kg/m³/j.

A l'issue d'une l'hydrolyse la concentration d'alimentation autorisée n'est plus limitée par des contraintes rhéologiques mais est plutôt liée au risque de toxicité de l'ammoniac libre dissous dans le digesteur. En effet, au cours de la digestion l'essentiel de l'azote de la matière organique éliminée se retrouve libéré sous forme d'une solution d'ammoniaque essentiellement constituée d'ammonium et d'une part minoritaire d'ammoniac dissous dépendant du pH. Cette fraction s'avère toxique pour les bactéries méthanogènes. Elle est d'autant plus importante que le pH est élevé et que la concentration initiale de la matière volatile est importante. Certains procédés contournent cette limite en assurant une première phase de digestion des boues avant hydrolyse. L'hydrolyse opérée ensuite est précédée d'une étape de concentration de la boue au cours de laquelle une partie de l'azote ammoniacal libérée par la première phase de digestion conventionnelle est éliminée pour permettre une seconde phase de digestion plus poussée. En d'autres termes, à l'issue d'une hydrolyse thermique, il faut souvent diluer la boue pour éviter de rentrer dans des contraintes de toxicité de l'ammoniac.

Il est connu également que le maintien du pH dans un digesteur est un paramètre important de fonctionnement car les bactéries ont besoin de conditions stables pour fonctionner. De plus lorsque le pH augmente, la proportion de NH₃ dissous va augmenter par rapport au NH₄⁺, ce qui augmente la toxicité. D'un autre côté si on laisse trop baisser le pH, par exemple par augmentation des acides gras volatils, produits intermédiaires de la réaction, l'acide acétique n'est plus disponible pour les bactéries méthanogènes et ne produit plus de biogaz.

Une autre particularité de la digestion anaérobie est le fait que les réactions qui interviennent sont le fait d'un consortium très complexe de populations bactériennes symbiotiques formant une chaine trophique. Ce qui signifie que les produits du métabolisme d'une population de bactéries servent de substrat à la population suivante. Dans cette chaine trophique certaines populations de bactéries, en particulier les acétoclastiques et les acétogènes, ont des cinétiques de croissance lente au regard des autres populations. De ce fait le dimensionnement des digesteurs doit garantir des temps de séjours suffisants pour éviter le lessivage de ces populations, lorsque le débit d'alimentation est à son maximum.

Par ailleurs les variations trop rapides de charge en entrée tendent à induire en digestion des déséquilibres transitoires entre les populations dont les taux de croissances sont très variables. Il y a alors risque d'accumulation des produits intermédiaires de la réaction tels que les acides gras volatils, accumulations qui peuvent devenir préjudiciables à la réaction au-delà d'une certaine concentration. De ce fait les digesteurs sont peu capables de supporter des variations de charges importantes, en particulier quand les concentrations d'alimentation sont fortes. Au contraire, lorsque le digesteur est alimenté à une charge inférieure à sa charge de design, le gain en rendement d'élimination est très limité. En effet, le dimensionnement conventionnel assure un temps de séjour hydraulique (à charge nominale) correspondant à la partie asymptotique de la courbe qui relie rendement et temps de séjour hydraulique. En outre au cours d'un épisode de faible charge, les masses des populations de bactéries actives diminuent proportionnellement à la diminution de substrat. Le digesteur est alors incapable de recouvrer rapidement sa capacité de traitement nominale. Il est donc essentiel de ne pas avoir d'à-coups de charge du digesteur.

Enfin l'hydrolyse thermique peut aussi être mise en aval de la digestion afin d'améliorer encore plus la digestion (digestion possible de produit non digéré dans un premier temps). Toutefois cet équipement mis en aval est encore moins rentabilisé qu'une hydrolyse mise en amont car le nouveau digesteur construit ne détruira qu'une petite partie de la matière organique, la plus grande partie étant détruite dans la première hydrolyse thermique et la digestion. De plus, si on utilise un seul digesteur, on construit deux appareils coûteux que sont les deux hydrolyses thermiques. Ainsi, bien que l'hydrolyse d'une boue déjà digérée conduise à une meilleure hydrolyse, la rentabilité est précaire.

Considérant le travail de l'hydrolyse thermique, si la matière n'est pas hydrolysée, on doit laisser la population bactérienne faire le travail dévolu à l'hydrolyse thermique et si le temps de séjour dans le digesteur hydraulique n'est pas suffisant, le digesteur se déstabilise.

En conclusion, le dimensionnement de l'hydrolyse thermique et celui du digesteur sont donc liés à la charge maximale attendue.

Toutefois, souvent, la charge réelle est beaucoup plus faible et fluctuante et l'on n'utilise pas les équipements au maximum de leur capacité. En effet, du fait de l'existence d'un talon de digestion maximum en fonction de la boue et de l'hydrolyse thermique, même si on allonge le temps de séjour dans le digesteur au-delà du dimensionnement, les bactéries ne travailleront pas vraiment plus. En revanche, si on hydrolyse de nouveau la boue en sortie de digestion, l'hydrolyse thermique permet de rendre de nouveau de la matière organique disponible.

Enfin, comme indiqué précédemment, un digesteur est un équilibre de population bactérienne et il ne sait donc pas traiter des variations de charge, charge massique et charge hydraulique. Si le digesteur est sous alimenté, une partie des populations bactériennes, faute de nourriture meurt et en cas d'augmentation rapide de charge, le développement des populations bactériennes n'est pas suffisant pour permettre la digestion de toute la nourriture accumulée. Ainsi, le digesteur même avec une bonne charge hydraulique ne va pas traiter toute la matière organique qu'il aurait pu traiter et est « sous utilisé ».

De tels procédés sont décrits dans les demandes internationales WO 2012/019310 et WO 2013/155631, la demande européenne EP 0564298, la demande chinoise CN 203373248, la demande US 2012/094363 et la demande canadienne CA 2752747.

Le document WO 2012/019310 décrit un procédé de traitement des eaux usées comprenant une étape d'hydrolyse thermique de la pulpe, suivie d'une étape de digestion et de déshydratation de la pulpe (via 22, étape AU et via 36, 39, 20 étape F, AO), puis d'une étape de recirculation d'une partie de la pulpe déshydratée vers l'étape d'hydrolyse thermique (via 35, étape AE).

Le document EP 0 564 298 concerne le traitement d'une boue organique capable de solubiliser une boue organique pour fournir une charge élevée de traitement de digestion anaérobie avec un taux de digestion et une quantité de récupération de méthane améliorés, ce qui diminue considérablement la quantité de boues organiques déchargées. Le procédé comprend un traitement alcalin à chaud pour amener la boue organique à une condition alcaline tout en maintenant la température de la boue à température ambiante à 100 °C pour solubiliser les matières organiques dans la boue, et un traitement de digestion anaérobie de digestion anaérobie de la boue organique après le traitement alcalin chaud à une température de 20 - 60 °C à un pH de 7,3 - 9,2.

Le document CN 203 373 248 concerne un dispositif de traitement de boues comprenant un dispositif de transport et de stockage des boues, un dispositif de trempe à basse température, un dispositif de digestion anaérobie des boues, un dispositif d'échange thermique dispositif, un dispositif de stockage d'échange de boues, un dispositif de déshydratation mécanique, un dispositif de désodorisation et une chaudière à vapeur.

Le document US2012/094363 concerne un procédé d'obtention de boues imputrescibles et d'énergie, ledit procédé comprenant les étapes suivantes : (i) obtention de boues digérées par digestion primaire de boues ; (ii) obtention d'un premier effluent aqueux et de boues digérées au moins partiellement déshydratées par une première séparation liquide-solide des boues digérées obtenues à l'étape (i) ; (iii) obtention de boues digérées au moins partiellement déshydratées et hydrolysées par hydrolyse thermique des boues digérées au moins partiellement déshydratées obtenues à l'étape (ii) ; (iv) digestion des boues digérées au moins partiellement déshydratées et hydrolysées obtenues à l'étape (iii) ; ledit procédé comprenant en outre une étape de récupération des biogaz formés au cours desdites digestion et digestion primaire et une étape de production d'énergie à partir dudit biogaz.

Le document WO 2013/155631 concerne un dispositif de séparation solide-liquide, par exemple un épaississeur de vis de boue, traite un courant prélevé dans le digesteur dans une boucle de recirculation.

Le document CA 2 752 747 concerne un procédé pour le traitement d'un liquide comprenant un matériau organique, le procédé comprenant des étapes de: digestion anaérobie du liquide pour produire un digestat; séparation par membrane des solides du digestat; et, recyclage des solides séparés à l'étape de digestion.

Il existe donc un besoin de disposer de procédés permettant de lisser la charge du digesteur et de permettre de l'alimenter toujours proche de son nominal pour éviter les pertes de populations bactériennes.

Aussi la présente invention a pour objet un procédé permettant de résoudre l'ensemble des problèmes énoncés ci-dessus, à savoir :
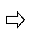 Une minimisation des coûts d'investissement afin de rentabiliser au maximum l'ensemble de l'hydrolyse thermique et du digesteur mis en oeuvre.
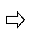 Une maximisation de la production de biogaz avec les équipements mis en place.
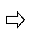 Une élimination des à-coups de charge et un maintien de la population bactérienne proche de son nominal
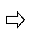 Une gestion de la toxicité de l'ammoniac dans le digesteur.

L'invention a donc pour objet, un procédé de traitement de pulpe, en particulier un procédé de traitement de boues de stations d'épuration, pour produire de l'énergie et/ou des matières organiques hygiénisées, comprenant :
i. une étape d'hydrolyse thermique aérée ou non de la pulpe,
ii. éventuellement une étape de dilution de la pulpe hydrolysée à l'étape i),
iii. une étape de digestion de type mésophile ou thermophile soit de la pulpe hydrolysée à l'étape i), soit de la pulpe hydrolysée et diluée à l'étape ii),
iv. une étape de déshydratation de la pulpe digérée issue de l'étape iii) et
v. une étape de recirculation d'une partie de la pulpe déshydratée issue de l'étape iv) vers l'étape d'hydrolyse thermique i),
ladite partie de la pulpe déshydratée issue de l'étape iv) qui est recirculée vers l'étape d'hydrolyse thermique i) étant pilotée par le taux de charge du digesteur afin de le maintenir le plus constant possible et proche de 1, le taux de charge du digesteur étant obtenu par calcul du taux de charge de l'hydrolyse thermique i) ou calcul du taux de charge de l'étape de digestion ii) ou des deux, caractérisé en ce que :- le taux de charge de l'hydrolyse thermique est calculé à partir des mesures de débit et de concentration en entrée d'hydrolyse thermique et du temps de séjour dans l'hydrolyse thermique, auxquelles on ajoute les mesures de débit et de concentration en retour de la déshydratation, et- le taux de charge de l'étape de digestion est calculé à partir des mesures de débit rentrant dans le digesteur, du temps de séjour nominal et de la concentration de la boue en entrée du digesteur.

Conformément à l'invention, la partie de la pulpe recyclée est calculée en fonction du taux de charge comme expliqué ci-après. Cela permet au couple hydrolyse thermique/digesteur de travailler à charge constante, donc sans à-coups de charge.

Conformément à l'invention, l'hydrolyse thermique permet de mettre la pulpe à traiter, notamment les boues d'épuration, en pression et en température pendant un temps de séjour déterminé avec des conditions contrôlées. Cette étape d'hydrolyse thermique peut être précédée d'une étape de pré-concentration de ladite pulpe afin de diminuer la taille des équipements mis en oeuvre. L'hydrolyse peut être partielle ou totale et le type de technologie d'hydrolyse peut être n'importe quel type connu de l'homme du métier. On peut citer à titre d'exemple non limitatif les procédés d'hydrolyse thermique décrits dans la demande internationale WO 96/09882 ou la demande internationale WO 2013/190486. Cette étape doit permettre de maintenir la pulpe dans un état de température et de pression suffisant afin de rendre rapidement digérable une partie de la matière organique donc
▪ de garantir un temps de séjour de la matière organique dans les conditions de température et avec la quantité d'oxygène voulue,
▪ de permettre l'introduction de la matière organique sous pression ou non,
▪ de permettre l'introduction de la vapeur et
▪ de maintenir des conditions de pression et de température adéquates.

Idéalement dans cette étape la température est supérieure à 140°C, avantageusement comprise entre 140 et 220°C, encore plus avantageusement entre 140 et 180°C et la pression supérieure à 0,5 MPa (5 bars), avantageusement comprise entre 0,5 MPa et 4 MPa (5 et 40 bars), encore plus avantageusement entre 0,6 et 1 MPa (6 et 10 bars).

Cette étape d'hydrolyse thermique peut être réalisée dans n'importe quel type de récipient, le choix de ces récipients et de l'épaisseur de leurs parois étant à la portée de l'homme du métier.

Conformément à l'invention, l'étape de digestion est réalisée par tout moyen ou dispositif et toute technologie connus de l'homme du métier ; on peut citer à titre d'exemples non limitatifs : les digesteurs ovoïdes, cylindriques, brassés au biogaz, mécaniquement ou hydrauliquement. Ces dispositifs sont tous désignés par la suite sous le nom de digesteur.

Le digesteur est équipé de tous les systèmes de régulation en température nécessaires à son fonctionnement, en particulier de systèmes de réchauffement et de refroidissement pour permettre son pilotage dans les conditions choisies (mésophile, thermophile ou autre). Tous ces systèmes font partie des connaissances générales de l'homme du métier.

L'étape de dilution (ii) par ajout d'eau permet de gérer les concentrations dans le digesteur. Elle est donc facultative et l'homme du métier saura grâce aux différents systèmes de contrôle de charges de l'hydrolyse thermique ou du digesteur ou des deux, s'il convient de mettre en oeuvre ladite étape.

Le fait de déshydrater en sortie de digestion (étape iv) permet à l'azote de partir avec les effluents. Si on retourne en tête du digesteur une matière organique moins chargée en azote et donc moins susceptible de relarguer de grandes quantités d'ammoniac dans le digesteur, et que l'on complète avec de l'eau ne contenant pas d'azote, on diminue la concentration d'ammoniac libre dans le digesteur et on soulage le fonctionnement de ce dernier.

L'étape de recirculation de la pulpe déshydratée issue de l'étape iv) vers l'étape d'hydrolyse thermique i) est réalisée par mise en place d'un bouclage en sortie de l'étape de déshydratation afin de faire passer à nouveau la pulpe déshydratée dans l'hydrolyse thermique lorsque le couple hydrolyse thermique/digesteur est disponible. Cela permet d'utiliser le dispositif d'hydrolyse thermique sur la pulpe digérée lorsque le digesteur et les réacteurs d'hydrolyse thermique sont sous utilisés par rapport au nominal de l'installation. En effet, dans le cas de la charge dite maximale, l'ensemble du flux passe dans l'hydrolyse thermique ainsi que dans le digesteur avec des temps de séjour dans ces deux équipements qui sont limitant par rapport aux dimensionnements des équipements. Il n'y a donc pas de place pour retourner la boue en entrée de l'hydrolyse thermique. En revanche, dans le cas d'une charge moindre en entrée, la pulpe déshydratée peut être retournée dans l'étape d'hydrolyse thermique ainsi que dans l'étape de digestion.

Un système de contrôle (30, 31) du taux de charge du moyen d'hydrolyse thermique (13) ou du moyen de digestion (14) ou des deux, est réalisé par pilotage de la quantité de retour provenant de la déshydratation (15) vers l'hydrolyse thermique (13).

Dans un mode de réalisation avantageux de l'invention, le procédé selon l'invention comprend une étape de déshydratation avant l'étape d'hydrolyse thermique i) afin d'obtenir une siccité suffisante, de l'ordre de 10-30% de matières sèches (rapport de la masse de matières sèches à la masse totale matières sèches + liquide), avantageusement à 17% pour minimiser la taille du réacteur d'hydrolyse thermique.

Dans un autre mode de réalisation avantageux du procédé selon l'invention, ledit procédé comprend une étape d'injection de base ou d'acide avant l'étape d'hydrolyse thermique i) pour contrôler le pH lors de l'étape de digestion ii) et augmenter l'hydrolyse lors de l'étape i).

Dans un autre mode de réalisation avantageux de l'invention, le procédé comprend une étape de refroidissement des déchets entre l'étape d'hydrolyse thermique i) et l'étape de digestion ii).

Si nécessaire, le procédé selon l'invention peut comprendre une étape de dilacération ou de dessablage de la pulpe ou les deux en amont des équipements mis en oeuvre pour réaliser les étapes i) à iv).

Dans un mode de réalisation avantageux de l'invention, le procédé comprend une étape de déshydratation avant l'étape d'hydrolyse thermique i).

L'invention a également pour objet une installation de traitement de pulpe, notamment de boues de station d'épuration, pour la mise en oeuvre du procédé selon l'invention, ladite installation comprenant un moyen d'hydrolyse thermique aérée ou non (13) communiquant avec un moyen de digestion (14) de la pulpe hydrolysée, ledit moyen d'hydrolyse communiquant avec des moyens d'amenée de la pulpe (11) et des moyens d'amenée de la pulpe à partir d'un moyen de déshydratation (15) de la pulpe issue du moyen de digestion (14) et des moyens d'évacuation du biogaz (16) provenant desdits moyens de digestion (14), et un système de contrôle (30, 31) du taux de charge du moyen d'hydrolyse thermique (13) ou du moyen de digestion (14) ou des deux, par pilotage de la quantité de retour provenant de la déshydratation (15) vers l'hydrolyse thermique (13), dans lequel le taux de charge du moyen d'hydrolyse thermique est compensé par le capteur (13b) et le taux de charge du moyen de digestion est compensé par le capteur (14b).

Conformément à l'invention, le moyen d'hydrolyse peut comprendre un ou plusieurs réacteurs indépendants installés en parallèle. Dans le cas de plusieurs réacteurs, le taux de charge est calculé sur le nombre de réacteurs disponibles.

Dans un mode de réalisation avantageux de l'invention, l'installation comporte un moyen de régulation du pH (41) dans le réacteur d'hydrolyse par injection d'un acide ou d'une base pour améliorer la cinétique d'hydrolyse et pour contrôler le pH du digesteur afin de maintenir un taux d'ammoniac libre suffisamment bas.

Lorsque plusieurs réacteurs d'hydrolyse sont en fonctionnement, l'injection de base ou d'acide peut se faire exclusivement dans un des réacteurs afin d'augmenter fortement l'hydrolyse dans ce réacteur.

Dans un mode avantageux de réalisation de l'invention, le réacteur d'hydrolyse qui reçoit l'acide ou la base est celui recevant les effluents de l'étape (v).

Dans un autre mode de réalisation avantageux de l'installation selon l'invention ladite installation comprend un système de contrôle du taux de charge du moyen d'hydrolyse thermique (30) ou du moyen de digestion (31) ou des deux.

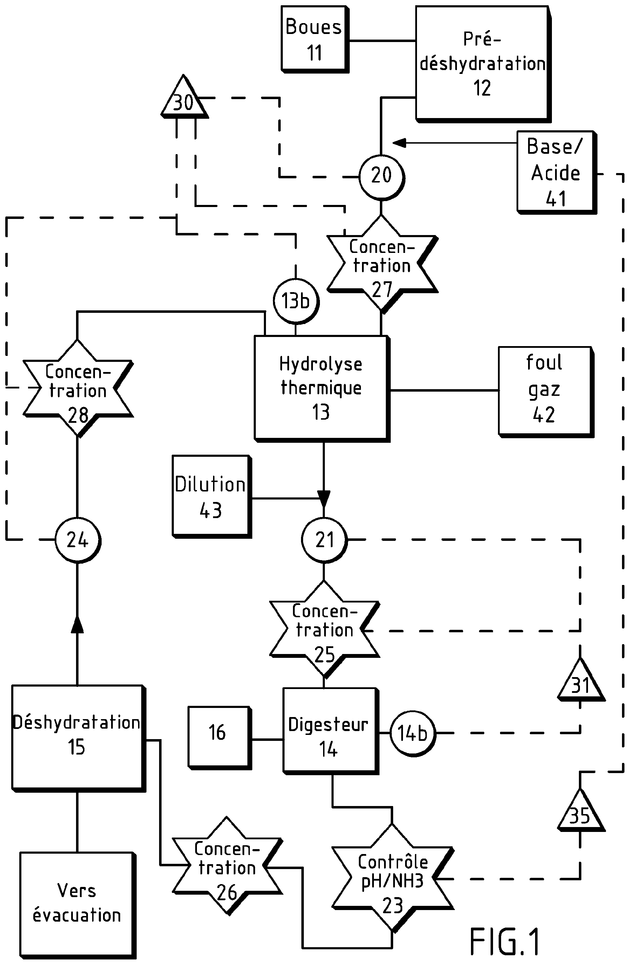

Afin de mieux faire comprendre le procédé objet de la présente invention, on en décrit ci-après :
∘ un mode de mise en oeuvre. Au cours de cette description, on se réfère à la figure 1 des dessins annexés qui est un schéma illustrant les différentes étapes du procédé selon l'invention appliqué à des boues de station d'épuration et
∘ un exemple de réalisation.

Il demeure bien entendu que ces exemples n'ont aucun caractère limitatif.

### Mode de mise en oeuvre selon la figure 1

∘ La boue (11) est préalablement déshydratée dans l'élément (12) afin d'obtenir une siccité suffisante pour minimiser la taille du réacteur d'hydrolyse thermique (13). Cette étape est réalisée par mise en température et en pression de la boue. Conformément à l'invention, il est possible de n'hydrolyser qu'une partie de la boue. Le type de technologie d'hydrolyse ne rentre pas ici en compte.
   Ce (ou ces réacteurs s'il y a lieu) permettent :
   ▪ de garantir un temps de séjour de la matière organique dans les conditions de température et avec la quantité d'oxygène voulue,
   ▪ d'introduire de la matière organique sous pression ou non,
   ▪ d'introduire de la vapeur et
   ▪ de maintenir des conditions de pression et de température adéquate, c'est à dire suffisant pour rendre rapidement digérable une partie de la matière organique.
∘ La boue hydrolysée en sortie de (13) est injectée dans le digesteur (14) après un éventuel refroidissement (non représenté) et après dilution à l'aide d'un système (43) dont le rôle sera décrit ci-après. La boue est ensuite digérée dans le digesteur mésophile ou thermophile (14) dont le temps de séjour est adapté à la charge nominale de l'installation. Ce digesteur est dimensionné avec un temps de séjour compris entre 10 et 25 jours, préférentiellement 20 jours en fonctionnement mésophile et 12 jours en fonctionnement thermophile. Le digesteur possède son propre circuit de chauffage de secours (non représenté sur le schéma). La température dans le digesteur est comprise entre 35 et 45°C, avantageusement égale à 37°C pour des mésophiles et comprise entre 50 et 60°C, avantageusement égale à 55°C pour des thermophiles.
∘ Enfin en sortie de digesteur (14) une post déshydratation (15) permet de rendre disponible la boue à un traitement ou une évacuation finale.

Ne sont pas non plus représentés, les outils de prétraitement des boues afin de retirer les filasses et le sable qui peuvent perturber l'hydrolyse thermique.

Un dilacérateur ainsi qu'un dessableur sont mis en place si besoin en fonction de la qualité de la boue pour protéger les équipements en aval.

Enfin ne sont pas représentés, les circuits de fluide thermique permettant de chauffer l'hydrolyse thermique et le digesteur.

L'invention vient de la mise en place d'un bouclage en sortie de la déshydratation (15) afin de faire passer à nouveau la boue dans l'hydrolyse thermique (13) lorsque le couple hydrolyse thermique/ digesteur (14) est disponible.

En effet, dans le cas de la charge dite maximale, l'ensemble du flux passe dans l'hydrolyse thermique (13) ainsi que dans le digesteur (14) avec des temps de séjour dans ces deux équipements qui sont limitant par rapport aux dimensionnements des équipements. Il n'y a donc pas de place pour retourner la boue en entrée de l'hydrolyse thermique (13).

En revanche, dans le cas d'une charge moindre en entrée (11), de la boue peut être retournée dans l'hydrolyse thermique (13) ainsi que dans le digesteur (14).

Le fait de déshydrater en sortie de digestion permet de plus à l'ammoniac de partir avec les effluents. Si on retourne en tête du digesteur (14) une boue moins chargée en azote et donc moins susceptible de relarguer de grandes quantités d'ammoniac dans le digesteur, et que l'on complète avec de l'eau de process ne contenant pas d'azote, on diminue la concentration d'ammoniac libre dans le digesteur et on soulage le fonctionnement de ce dernier.

Le retour en hydrolyse thermique (13) est piloté par plusieurs capteurs (13b et 14b).

Une mesure de débit (20) et une mesure de concentration (27) en entrée d'hydrolyse thermique mesure le taux de charge moyenné sur un temps caractéristique (typiquement de 0,5 à 5 temps de séjour dans l'hydrolyse thermique) afin de calculer un taux de charge de l'hydrolyse thermique. On ajoute à cette valeur, la mesure de débit (24) et une mesure de concentration (28) en retour de la déshydratation (15). Cette mesure de taux de charge peut être faite aussi par un nombre de remplissage du réacteur (batchs) ou tout autre système permettant sur le temps caractéristique de calculer le volume passant dans le système.

Ce taux de charge est compensé par un capteur (13b) au niveau de l'hydrolyse thermique qui détermine la disponibilité de la machine, c'est à dire le nombre de lignes en parallèle réellement en fonctionnement (par exemple une ligne en maintenance).

L'ensemble de ces deux informations détermine un taux de charge réel (30) compris entre 0 et 1 de la machine.

Une mesure de débit (21) rentrant dans le digesteur mesure le temps de séjour hydraulique de la boue dans le digesteur.

Ce temps de séjour est compensé par une information provenant des digesteurs qui détermine une disponibilité des digesteurs

Ce temps de séjour compensé, divisé par un temps de séjour nominal défini par le process (typiquement de 10 à 25 jours) détermine un taux de charge (31) du digesteur compris entre 0 et 1.

Une mesure de concentration de la boue en entrée (25) vient compléter le calcul du taux de charge (31) par la comparaison de la charge d'entrée par rapport à la charge massique acceptable du digesteur.

Un paramètre modifiable de quantité de matière organique par rapport à la matière sèche peut aussi être rentré dans le système pour calculer la charge sur la matière organique.

Enfin la mesure de charge massique du digesteur peut aussi être faite en amont de l'hydrolyse thermique par une mesure de concentration en (27) et de débit en (20) avant l'hydrolyse thermique (13) complétée de la mesure de la concentration (28) et du débit (24) sur la boucle de retour. En effet, l'hydrolyse thermique a tendance à solubiliser de la matière organique qui n'est alors plus accessible à la mesure de concentration.

Un taux de charge 31 final est donc calculé.

A partir des deux taux de charge 30 et 31 on prend la valeur maximum qui correspond au taux de charge de l'installation.

Cette information pilote le retour de la boue (15) afin que le taux de charge calculé soit toujours égal à 1. On contrôle ce débit par une mesure de débit (24).

Un analyseur de pH et d'ammonium (23) est situé en sortie du digesteur. Ce capteur détermine une concentration d'ammoniac libre dans le digesteur et un facteur de toxicité à partir de cette concentration.

Cet analyseur va déclencher une injection de base en (41) ainsi que d'eau de dilution en (43) par le biais d'une boucle PID (proportionnel intégral dérivé) lente afin de retrouver dans le digesteur des conditions optimum.

Une mesure de concentration de la boue (25) en entrée du digesteur et une mesure de concentration de la boue (26) en sortie du digesteur permettent de mesurer en direct le taux d'élimination de la matière organique et donc la qualité de fonctionnement du digesteur et donc de corriger à long terme le retour du digesteur.

La mesure de concentration (25) pilote la dilution (43) afin de ne pas avoir une concentration trop importante dans le digesteur qui poserait des problèmes de brassage et donc de réacteur uniformément mélangé, condition importante pour avoir de bons rendements.

Dans une autre variante, l'hydrolyse thermique n'est mise que sur les retours de déshydratation (15) et n'est donc utilisée qu'en cas de sous charge du digesteur (14). Cela peut être particulièrement intéressant dans le cas de boues dites « faciles à digérer » pour lesquelles l'apport d'une hydrolyse thermique n'est pas utile. En effet, dans ce cas, on utilise toujours le digesteur au maximum de ses capacités, même dans le cas de baisse de charge et on évite les fluctuations de charge dans le digesteur cela sans avoir à investir dans une pré-déshydratation (12) et en ne construisant qu'un système d'hydrolyse thermique (13) de petite taille qui ne traitera qu'une fraction de la boue.

Dans une variante où en particulier il y a plusieurs lignes d'hydrolyse thermique, en cas de sous charge, une des lignes est dédiée au traitement des boues déshydratées en retour ; cette ligne est celle qui reçoit la base ou l'acide.

Dans cette ligne, en cas d'augmentation du NH₃ libre sans augmentation de pH ou d'acidification dans le digesteur, le pH particulièrement élevé dans le réacteur d'hydrolyse par ajout de base va aider à hydrolyser la matière organique, et à capter facilement l'ammoniac en retour dans les buées du réacteur d'hydrolyse. (gaz d'échappement - foul gaz 42).

Dans le cas d'une augmentation de pH en (23), l'ajout d'acide dans le réacteur va aussi permettre d'aider à hydrolyser la matière organique.

Dans le système selon l'invention, la déshydratation finale (15) n'est pas surdimensionnée par rapport à un fonctionnement classique car de toute façon la déshydratation doit être capable de traiter la pointe hydraulique. En d'autres termes, les retours ne se font que si on n'est pas dans la configuration de la pointe hydraulique, donc il n'y a jamais de surcharge de la déshydratation.

### Exemple de calcul d'optimisation d'un réacteur d'hydrolyse thermique et d'un digesteur

Dans le cas d'une boue à 100 tMS/j 75% MV en pointe et 80 tMS/j en pointe sur 15 jours, si on envisage une hydrolyse thermique de 1h à une concentration de 16% et une digestion de 15 jours à une concentration d'entrée de 9%, alors on obtient un réacteur de : 100/0,16/24x1 =26 m³ et on obtient un digesteur de 80 /0,09x15 = 13 333 m³.

Le réacteur d'hydrolyse thermique est dimensionné sur une pointe journalière ou bi journalière en fonction du tampon de boues situé en amont, tandis que la charge maximale du digesteur est celle correspondant à une pointe de 15-20 jours continue.

Il y a donc moyen de dimensionner le réacteur sur une pointe par exemple de 5 jours continus par exemple 85 t MS/j. Cela diminue donc le réacteur de 15% à débit hydraulique constant.

Ensuite, pour passer la pointe de 100 tMS/j, on va diminuer le temps de séjour dans le réacteur: 51 minutes au lieu de 60 minutes.

Toutefois, la boue qui n'aura été hydrolysée que 51 minutes, sur les 15 jours du temps de séjour du digesteur, pourra repasser dans l'hydrolyse thermique car la charge sera toujours inférieure à 100 tMS/j par la suite.

Ainsi, si on dimensionne sur 51 minutes dans le réacteur pendant toute cette pointe, pendant les 4 jours de pointe il arrive 81,25 tMS/j (pour faire 85 t sur 5 jours) et il arrive sur les 10 jours suivant sur le réacteur 77,5 tMS/j. (ou 19, 4 t MM/j) (pour faire 80 tMS/j sur 15 jours).

On peut donc traiter pendant 4 jours 18,75 tMS/j en retour, ce qui correspond à environ (MV sortie 60%) 7,5 t MM/j.

Et pendant 10 jours 22,5 t MS/j, ce qui correspond à environ 9 t MM/j.

On a donc sur les 15 jours, 75 tMM recirculé pour 300 t MM injecté de l'extérieur soit 25% de recirculation, ce qui veut dire que sur cette période de 15 jours de pointe, grâce à la recirculation et malgré une diminution du temps d'hydrolyse de 51 mn, la boue aura vu un temps réel d'hydrolyse de 51x1,25 = 64 mn.

On a donc une hydrolyse réelle de la boue qui est à son nominale malgré un temps physique inférieur.

La recirculation permet donc d'utiliser chacun des deux équipements à son nominal le plus longtemps possible en utilisant le découplage des temps de séjour entre l'hydrolyse et la digestion.

## Revendications

1. Procédé de traitement de pulpe, en particulier procédé de traitement de boues de stations d'épuration, pour produire de l'énergie et/ou des matières organiques hygiénisées, comprenant :
i. une étape d'hydrolyse thermique (13) aérée ou non de la pulpe,
ii. éventuellement une étape de dilution (43) de la pulpe hydrolysée à l'étape i),
iii. une étape de digestion (14) de type mésophile ou thermophile soit de la pulpe hydrolysés à l'étape i), soit de la pulpe hydrolysée et diluée à l'étape ii),
iv. une étape de déshydratation (15) de la pulpe issue de l'étape iii) et
v. une étape de recirculation d'une partie de la pulpe déshydratée issue de l'étape iv) vers l'étape d'hydrolyse thermique i), ladite partie de la pulpe déshydratée issue de l'étape iv) qui est recirculée vers l'étape d'hydrolyse thermique i) étant pilotée par le taux de charge du digesteur afin de le maintenir le plus constant possible et proche de 1, le taux de charge du digesteur étant obtenu par calcul du taux de charge de l'hydrolyse thermique i) ou calcul du taux de charge de l'étape de digestion ii) ou des deux, **caractérisé en ce que** :
- le taux de charge de l'hydrolyse thermique est calculé à partir des mesures de débit (20) et de concentration (27) en entrée d'hydrolyse thermique et du temps de séjour dans l'hydrolyse thermique, auxquelles on ajoute les mesures de débit (24) et de concentration (28) en retour de la déshydratation (15), et
- le taux de charge de l'étape de digestion est calculé à partir des mesures de débit (21) rentrant dans le digesteur, du temps de séjour nominal et de la concentration de la boue en entrée (25) du digesteur.

2. Procédé selon la revendication 1, **caractérisé en ce qu'**il comprend en outre une étape d'injection de base ou d'acide (41) avant l'étape d'hydrolyse thermique i) (13) pour contrôler le pH lors de l'étape de digestion ii) (14) et augmenter l'hydrolyse lors de l'étape i).

3. Procédé selon la revendication 2 dans lequel plusieurs réacteurs d'hydrolyse sont en fonctionnement et pour lequel l'injection de base ou d'acide se fait exclusivement dans un des réacteurs afin d'augmenter fortement l'hydrolyse dans ce réacteur.

4. Procédé selon la revendication 3 dans lequel le réacteur d'hydrolyse recevant de l'acide ou de la base est celui recevant les effluents de l'étape (v).

5. Installation de traitement de pulpe, notamment de boues de station d'épuration, pour la mise en oeuvre d'un procédé selon l'une quelconque des revendications précédentes, ladite installation comprenant un moyen d'hydrolyse thermique aérée ou non (13) communiquant avec un moyen de digestion (14) de ladite pulpe hydrolysée, ledit moyen d'hydrolyse (13) communiquant avec des moyens d'amenée de la pulpe (11) et des moyens d'amenée de ladite pulpe recyclée à partir d'un moyen de déshydratation (15) de la pulpe issue du moyen de digestion (14) et des moyens d'évacuation du biogaz (16) provenant desdits moyens de digestion (14) et un système de contrôle (30, 31) du taux de charge du moyen d'hydrolyse thermique (13) ou du moyen de digestion (14) ou des deux, par pilotage de la quantité de retour provenant de la déshydratation (15) vers l'hydrolyse thermique (13), dans lequel le taux de charge du moyen d'hydrolyse thermique est compensé par le capteur (13b) et le taux de charge du moyen de digestion est compensé par le capteur (14b).

6. Installation selon la revendication 5, **caractérisée en ce qu'**elle comporte un moyen de régulation du pH (41) dans le réacteur d'hydrolyse par injection d'un acide ou d'une base pour améliorer la cinétique d'hydrolyse.

## Patentansprüche

1. Verfahren zur Behandlung von Pulpe, insbesondere Verfahren zur Behandlung von Klärschlamm, um Energie und/oder hygienisierte organische Substanzen zu gewinnen, umfassend:
i. einen aeroben oder anaeroben thermischen Hydrolyseschritt (13) der Pulpe,
ii. gegebenenfalls einen Verdünnungsschritt (43) der hydrolysierten Pulpe aus Schritt i),
iii. einen Schritt der Faulung (14) im mesophilen oder thermophilen Bereich der in Schritt i) hydrolysierten Pulpe, oder der hydrolysierten und in Schritt ii) verdünnten Pulpe,
iv. einen Dehydratationsschritt (15) der in Schritt iii) erhaltenen Pulpe und
v. einen Rückführungsschritt eines Teils der dehydrierten Pulpe aus Schritt iv) zum thermischen Hydrolyseschritt i), wobei der Teil der dehydrierten Pulpe aus Schritt iv), der zum thermischen Hydrolyseschritt i) zurückgeführt wird, über den Beladungsgrad des Faulbehälters gesteuert wird, um ihn möglichst konstant und annähernd gleich 1 zu halten, wobei der Beladungsgrad des Faulbehälters durch die Berechnung des Beladungsgrads der thermischen Hydrolyse i) ermittelt oder durch die Berechnung des Beladungsgrads des Schritts der Faulung iii) oder beider Werte ermittelt wird, **dadurch gekennzeichnet, dass**:
- der Beladungsgrad der thermischen Hydrolyse aus der Durchflussmessung (20) und der Konzentrationsmessung (27) beim Eintritt in die thermische Hydrolyse und aus der Aufenthaltsdauer während der thermischen Hydrolyse berechnet wird, zu denen die Werte der Durchflussmessung (24) und der Konzentrationsmessung (28) nach dem Dehydratationsschritt (15) hinzugefügt werden, und
- der Beladungsgrad des Schritts der Faulung aus den Durchflussmessungen (21), die in den Faulbehälter zurückkehren, der Soll-Verweildauer und der Schlammkonzentration am Einlass (25) des Faulbehälters berechnet wird.

2. Verfahren nach Anspruch 1, **dadurch gekennzeichnet, dass** es ferner einen Schritt zum Einspritzen einer Base oder Säure (41) vor dem thermischen Hydrolyseschritt i) (13) umfasst, um den pH-Wert während des Schritts der Faulung iii) (14) zu kontrollieren und die Hydrolyse während des Schritts i) zu steigern.

3. Verfahren nach Anspruch 2, bei dem mehrere Hydrolyse-Reaktoren in Betrieb sind und bei dem der Schritt zum Einspritzen einer Base oder Säure ausschließlich in einem der Reaktoren vorgenommen wird, um die Hydrolyse in diesem Reaktor erheblich zu steigern.

4. Verfahren nach Anspruch 3, bei dem der Hydrolyse-Reaktor, der die Säure oder die Base empfängt, jener ist, der die Abwässer aus Schritt (v) empfängt.

5. Anlage zur Behandlung von Pulpe, insbesondere von Klärschlamm, für die Durchführung eines Verfahrens gemäß einem der vorhergehenden Ansprüche, wobei die Anlage Mittel zur aeroben oder anaeroben thermischen Hydrolyse (13) umfasst, welche mit einem Mittel zur Faulung (14) der hydrolysierten Pulpe verbunden sind, wobei das Mittel zur Hydrolyse (13) mit Mitteln zum Zuführen der Pulpe (11) und Mitteln zum Zuführen der rückgeführten Pulpe aus dem Mittel zur Dehydratation (15) der aus dem Mittel zur Faulung (14) austretenden Pulpe verbunden ist und Mittel zum Abführen des Biogases (16) aus dem Mittel zur Faulung (14) und ein Kontrollsystem (30, 31) für den Beladungsgrad des Mittels zur thermischen Hydrolyse (13) oder des Mittels zur Faulung (14) oder beider, durch die Steuerung der aus der Dehydratation (15) zur thermischen Hydrolyse (13) rückgeführten Menge umfasst, wobei der Beladungsgrad des Mittels zur thermischen Hydrolyse durch den Sensor (13b) kompensiert wird und der Beladungsgrad des Mittels zur Faulung durch den Sensor (14b) kompensiert wird.

6. Anlage gemäß Anspruch 5, **dadurch gekennzeichnet, dass** sie im Hydrolyse-Reaktor ein Mittel zum Regeln des pH-Werts (41) durch Einspritzen einer Base oder einer Säure umfasst, um die Kinetik der Hydrolyse zu verbessern.

## Claims

1. A method for treating pulp, in particular a method for treating purification plant sludge, for producing energy and/or organic matter that has been rendered hygienic, comprising
i. a step of aerated or non-aerated thermal hydrolysis (13) of the pulp,
ii. optionally a step of dilution (43) of the pulp hydrolyzed in step i),
iii. a digestion step (14) of mesophilic or thermophilic type either of the pulp hydrolyzed in step i), or of the pulp hydrolyzed and diluted in step ii),
iv. a step of dehydration (15) of the pulp resulting from the step iii) and
v. a step of recirculation of a part of the dehydrated pulp resulting from step iv) to the thermal hydrolysis step i), said part of the dehydrated pulp resulting from step iv) which is recirculated to the thermal hydrolysis step i) being controlled by the rate of loading of the digester in order to keep it as constant as possible and close to 1, the rate of loading of the digester being obtained by calculated the rate of loading of the thermal hydrolysis i) ou by calculated the rate of loading of the digestion step ii) or of both, **characterized in that** :
- the rate of loading of the thermal hydrolysis is calculated from the measurements of the flow rate (20) and of the concentration (27) at the inlet of the thermal hydrolysis and of the residence time in the thermal hydrolysis, to which it is added the measurements of flow rate (24) concentration (28) at the return of the dehydration (15),
- the rate of loading of the digestion step is calculated from the measurements of flow rate (21) entering into the digester, the nominal residence time and the concentration of the sludge at the intlet (25) of the digester.

2. The method according to claim 1, **characterized in that** it further comprises a step of injection of base or of acid (41) before the thermal hydrolysis step i) (13) in order to control the pH during the digestion step ii) (14) and to increase the hydrolysis during step i).

3. The method according to claim 2, wherein several hydrolysis reactors are operating and for which the injection of base or of acid is exclusively carried out in one of the reactors in order to greatly increase the hydrolysis in this reactor.

4. The method according to claim 3, wherein the hydrolysis reactor receiving acid or base is the one receiving the effluents of step v).

5. A plant for treating pulp, in particular purification plant sludge, for carrying out a method according to any one of the preceding claims, said plant comprising a means of aerated or non-aerated thermal hydrolysis (13) communicating with a means of digestion (14) of the hydrolyzed pulp, said hydrolysis means communicating with means for conveying the pulp (11) and means for conveying said pulp recycled from a means of dehydration (15) of the pulp resulting from the digestion means (14) and means for evacuating biogas (16) originating from said digestion means (14) and a system for controlling (30, 31) the rate of loading of the thermal hydrolysis means (13) or of the digestion means (14) or of both, by controlling the amount of return originating from the dehydration (15) to the thermal hydrolysis (13), wherein the rate of loading of the thermal hydrolysis means is compensated by the sensor (13b) and the rate of the digestion means is compensated by the sensor (14b).

6. The plant according to claim 5, **characterized in that** it comprises a means of regulating the pH (41) in the hydrolysis reactor by injecting an acid or a base so as to improve the hydrolysis kinetics.
